# EUROPEAN PATENT APPLICATION

(11) **EP 4 467 226 A1**
(43) Date of publication of application: **27.11.2024**
(21) Application number: 22922300.3
(22) Date of filing: 17.06.2022
(51) Int. Cl.: B01D 53/14, F23J 15/04, B01D 47/02, B01D 53/78, B01D 53/79, B01D 45/12, B01D 63/16

(54) **CARBON DIOXIDE AND SULFUR OXIDE CAPTURE AND CARBON RESOURCE CONVERSION SYSTEM FOR COAL-FIRED POWER GENERATION**

(30) Priority: 21.01.2022 KR 20220009434
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/008641
(87) International publication number: WO 2023/140441

(57) **Abstract**

Proposed is a carbon dioxide and sulfur oxide capture and carbon resource conversion system for coal-fired power generation, the system being capable of capturing and converting carbon dioxide in an exhaust gas into a carbon resource by using a basic alkaline mixture solution, thereby being capable of reducing carbon dioxide and also capable of manufacturing sodium carbonate or sodium bicarbonate. In the system, sodium carbonate or sodium bicarbonate manufactured from the captured carbon dioxide is used as a desulfurization agent capturing sulfur oxide in an exhaust gas discharged from a coal-fired power generation plant, and carbon dioxide and sulfur oxide are simultaneously captured, so that an additional flue gas desulfurization equipment is not required to be mounted. Accordingly, the installation space of the desulfurization equipment for removing pollutants contained in gas introduced into carbon dioxide capture equipment may be minimized, and the process cost may be reduced.

## Description

### Technical Field

The present disclosure relates to a carbon dioxide and sulfur oxide capture and carbon resource conversion system for coal-fired power generation. More particularly, the present disclosure relates to a carbon dioxide and sulfur oxide capture and carbon resource conversion system for coal-fired power generation, the system being capable of capturing carbon dioxide in an exhaust gas by using a basic alkaline mixture solution and being capable of converting the captured carbon dioxide into a carbon resource, the system being capable of capturing carbon dioxide and being capable of converting the captured carbon dioxide into other useful materials, and the system being capable of using the utilized materials so as to capture sulfur oxide in the exhaust gas discharged from a coal-fired power generation plant.

### Background Art

Recently, in accordance with the Framework Convention on Climate Change for preventing global warming, and as one of alternatives to reduce emission of carbon dioxide (CO₂) that accounts for most of the greenhouse gases causing global warming, Carbon Capture and Storage (CCS) technology is actively being researched.

As the development of such a Carbon Capture and Storage (CCS) technology is implemented in earnest, the level of carbon dioxide capture (Carbon Capture) technology is reaching the commercialization stage. Particularly, the carbon dioxide capture technology is being applied preferentially to coal-fired power generation plant facilities which are recognized as the main sources of greenhouse gas emissions.

This is because coal emits more carbon dioxide than other energy sources since coal has a high carbon (C)/hydrogen (H) ratio among fossil fuels. Therefore, in a coal-fired power generation plant using coal as a fuel, a reduction in greenhouse gas emissions has become a major objective.

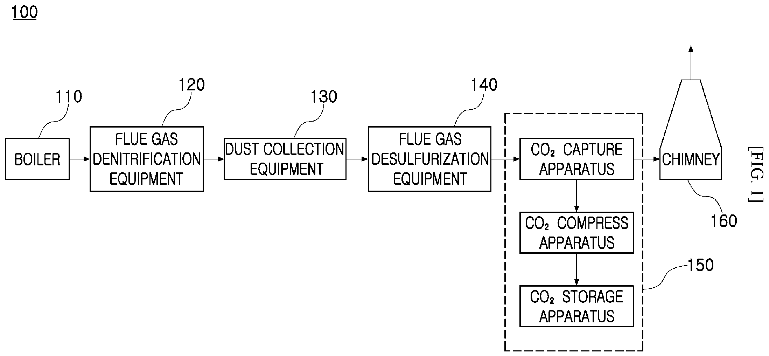

FIG. 1 is a view illustrating a combustion exhaust gas treatment system of a conventional coal-fired power generation plant. Referring to FIG. 1, in the combustion exhaust gas treatment system of the conventional coal-fired power generation plant, after pollutants in a combustion exhaust gas discharged from a boiler 110 are removed through flue gas denitrification equipment 120, dust collection equipment 130, and flue gas desulfurization equipment 140, carbon dioxide is captured through carbon dioxide capture equipment 160 and then is compressed and stored, and the combustion exhaust gas is discharged to the atmosphere through a chimney 160.

As illustrated in FIG. 1, in the combustion exhaust gas treatment system of the conventional coal-fired power generation plant, most of the combustion exhaust gas treatment systems are provided with the flue gas denitrification equipment 120 and the flue gas desulfurization equipment 140, and the degree of 90% of sulfur oxide (SOx) and nitrogen oxide (NOx) contained in the combustion exhaust gas are removed and discharged.

However, even after the combustion exhaust gas passes through the flue gas denitrification equipment and the flue gas desulfurization equipment, sulfur oxide (SOx) of 50 ppm to 100 ppm is included in the combustion exhaust gas. Furthermore, in the combustion exhaust gas, when the combustion exhaust gas containing nitrogen dioxide (NO₂) which is about 5% of sulfur oxide is introduced into a carbon dioxide capture process, there is a problem that the process operation efficiency and economic feasibility are reduced due to the deterioration of an amine-based absorber used in conventional carbon dioxide capture facilities.

In addition, in order to maintain a concentration of sulfur oxide (SOx) discharged by using the existing flue gas desulfurization equipment to be less than 15 ppm, which is an emission allowable standard according to the recently strengthened clean air conservation act, there is a problem that the geometrical size of an absorption tower is required to be significantly increased, and a filling material and the internal structure are required to be completely modified.

Meanwhile, when carbon dioxide capture equipment is required to be added to a combustion exhaust gas treatment system of a coal-fired power generation plant that is already installed and operated, the existing flue gas desulfurization equipment cannot be modified and used, and there is a problem that additional second flue gas desulfurization equipment 150 is required to be added.

As such, in order to treat carbon dioxide and sulfur oxide in an exhaust gas generated in the conventional coal-fired power generation plant, there are disadvantages that the huge cost is required and the overall system configuration becomes complicated.

Therefore, there is an urgent need for a plan for efficiently reducing carbon dioxide discharged from a coal-fired power generation plant and for simultaneously reducing sulfur oxide at the low cost by a simple system configuration compared to that of the conventional technology.

### Disclosure

### Technical Problem

Accordingly, the present disclosure has been made keeping in mind the above problems occurring in the related art, and an objective of the present disclosure is to provide a system for reducing carbon dioxide and sulfur oxide in an exhaust gas generated in a coal-fired power generation plant.

In addition, another objective of the present disclosure is to provide a carbon dioxide and sulfur oxide capture and carbon resource conversion system for coal-fired power generation, the system being configured to use a basic alkaline mixture solution such that carbon dioxide in an exhaust gas is captured and converted into a carbon resource so that carbon dioxide is removed and also carbon dioxide is recycled into other useful materials.

In addition, still another objective of the present disclosure is to provide a carbon dioxide and sulfur oxide capture and carbon resource conversion system for coal-fired power generation, the system being capable of capturing carbon dioxide in an exhaust gas by using a basic alkaline mixture solution, and the system being capable of using the captured carbon dioxide for capturing sulfur oxide in the exhaust gas.

The technical problems to be solved by the present disclosure are not limited to the above-mentioned problems, and other problems which are not mentioned will be clearly understood by those skilled in the art from the following description.

### Technical Solution

In order to achieve the above objectives, according to a first embodiment of the present disclosure, there is provided a carbon dioxide and sulfur oxide capture and carbon resource conversion system for coal-fired power generation, the system being configured such that an exhaust gas discharged from combustion equipment burning oil or coal sequentially passes through flue gas denitrification equipment, dust collection equipment, and flue gas desulfurization equipment so that pollutants contained in the exhaust gas is removed and the exhaust gas is supplied to carbon dioxide capture equipment, the carbon dioxide capture equipment including: a mixer configured to supply a basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect a reactant containing carbon dioxide captured in the absorption tower and to separate a carbon dioxide reactant and a waste solution from the reactant; a carbon resource storage unit storing the separated carbon dioxide reactant for utilizing the carbon dioxide reactant; and a discharge part configured to discharge a residual exhaust gas from which carbon dioxide captured in the absorption tower is removed.

In addition, the mixer may be configured to generate the basic alkaline mixture solution by mixing a basic alkaline solution supplied from a basic alkaline solution storage with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the basic alkaline mixture solution may be input by being adjusted through a valve in the mixer when a level of the basic alkaline mixture solution in the absorption tower is lowered to less than 90%, and inputting of the basic alkaline mixture solution may be stopped and, at the same time, the basic alkaline solution and water may be mixed until a pH of the basic alkaline mixture solution becomes pH 12 to pH 13.5 when the level of the basic alkaline mixture solution becomes 100%.

In addition, the bubbler may be configured to form exhaust gas micro bubbles by using the exhaust gas.

In addition, the absorption tower may include: a plurality of nozzles configured to spray the basic alkaline mixture solution in an umbrella shape upward from the mixer in the absorption tower; a fine droplet member configured such that the basic alkaline mixture solution sprayed in the umbrella shape is brought into contact with pores and forms fine droplets when the basic alkaline mixture solution falls downward; and a baffle having a plurality of slits or holes such that the exhaust gas is introduced with a uniform speed distribution.

In addition, the carbon dioxide reactant may include sodium carbonate (Na₂CO₃) or sodium bicarbonate (NaHCO₃).

In addition, the separator may include: a centrifuge configured to separate the waste solution and the carbon dioxide reactant containing sodium carbonate (Na₂CO₃) or sodium bicarbonate (NaHCO₃) from the reactant; and a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

In addition, the carbon dioxide capture equipment may further include: a monitoring part configured to monitor a level and a pH of the basic alkaline mixture solution in the absorption tower; and a control part configured to adjust a supply amount of the basic alkaline mixture solution by the monitoring part.

In order to achieve the above objectives, according to a second embodiment of the present disclosure, there is provided a carbon dioxide and sulfur oxide capture and carbon resource conversion system for coal-fired power generation, the system being configured such that an exhaust gas discharged from combustion equipment burning oil or coal sequentially passes through flue gas denitrification equipment, dust collection equipment, and flue gas desulfurization equipment so that pollutants contained in the exhaust gas are removed and the exhaust gas is supplied to carbon dioxide capture equipment, the carbon dioxide capture equipment including: a mixer configured to supply a basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect a reactant containing carbon dioxide captured in the absorption tower and to separate a carbon dioxide reactant and a waste solution from the reactant; and a discharge part configured to transmit the carbon dioxide reactant to the absorption tower from the separator, to capture sulfur oxide in the exhaust gas, and to discharge the captured sulfur oxide, the carbon dioxide reactant, and a residual exhaust gas.

In addition, the mixer may be configured to generate the basic alkaline mixture solution by mixing a basic alkaline solution supplied from a basic alkaline solution storage with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

In addition, the basic alkaline mixture solution may be input by being adjusted through a valve in the mixer when a level of the basic alkaline mixture solution in the absorption tower is lowered to less than 90%, and inputting of the basic alkaline mixture solution may be stopped and, at the same time, the basic alkaline solution and water may be mixed until a pH of the basic alkaline mixture solution becomes pH 12 to pH 13.5 when the level of the basic alkaline mixture solution becomes 100%.

In addition, the bubbler may be configured to form exhaust gas micro bubbles by using the exhaust gas.

In addition, the absorption tower may include: a plurality of nozzles configured to spray the basic alkaline mixture solution in an umbrella shape upward from the mixer in the absorption tower; a fine droplet member configured such that the basic alkaline mixture solution sprayed in the umbrella shape is brought into contact with pores and forms fine droplets when the basic alkaline mixture solution falls downward; and a baffle having a plurality of slits or holes such that the exhaust gas is introduced with a uniform speed distribution.

In addition, the carbon dioxide reactant may include sodium carbonate (Na₂CO₃) or sodium bicarbonate (NaHCO₃).

In addition, the separator may include: a centrifuge configured to separate the waste solution and the carbon dioxide reactant containing sodium carbonate (Na₂CO₃) or sodium bicarbonate (NaHCO₃) from the reactant; and a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

In addition, the carbon dioxide capture equipment may further include: a monitoring part configured to monitor a level and a pH of the basic alkaline mixture solution in the absorption tower; and a control part configured to adjust a supply amount of the basic alkaline mixture solution by the monitoring part.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide may be reduced by capturing carbon dioxide in the exhaust gas discharged in the coal-fired power generation plant, and sodium carbonate or sodium bicarbonate, which are useful resources, may be manufactured by using the captured carbon dioxide.

In addition, according to an embodiment of the present disclosure, since sodium carbonate or sodium bicarbonate manufactured from the captured carbon dioxide is utilized such that sodium carbonate or sodium bicarbonate is used as a desulfurization agent capturing sulfur oxide in the exhaust gas discharged from the coal-fired power generation plant, carbon dioxide and also sulfur oxide are capable of being captured simultaneously through the simple system configuration. Accordingly, since there is no need to mount additional second flue gas desulfurization equipment, the installation space of the desulfurization equipment for removing pollutants contained in gas introduced into the carbon dioxide capture equipment may be minimized, and the process cost may be reduced.

### Description of Drawings

FIG. 1 is a view illustrating a combustion exhaust gas treatment system of a conventional coal-fired power generation plant.
FIG. 2 is a view illustrating a configuration of a carbon dioxide and sulfur oxide capture and carbon resource conversion system for coal-fired power generation according to a first embodiment of the present disclosure.
FIG. 3 is a view illustrating a configuration of the carbon dioxide and sulfur oxide capture and carbon resource conversion system for coal-fired power generation according to a second embodiment of the present disclosure.
FIG. 4 is a view illustrating carbon dioxide capture equipment 250 according to the first embodiment of the present disclosure.
FIG. 5 is a view illustrating carbon dioxide capture equipment 340 according to the second embodiment of the present disclosure.
FIG. 6 is a view schematically illustrating an internal configuration of an absorption tower for improving carbon dioxide capture performance of the carbon dioxide capture equipment according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

The present disclosure relates to a carbon dioxide and sulfur oxide capture and carbon resource conversion system for coal-fired power generation, the system being configured to reduce carbon dioxide and sulfur oxide in an exhaust gas generated in a coal-fired power generation plant.

According to a first embodiment of the present disclosure, carbon dioxide is capable of being reduced and carbon dioxide is capable of being converted into outer useful materials in a manner different from a conventional exhaust gas treatment system for coal-fired power generation. Furthermore, according to a second embodiment of the present disclosure, carbon dioxide and sulfur oxide are capable of being reduced while flue gas desulfurization equipment is not included in the conventional exhaust gas treatment system for coal-fired power generation.

Hereinafter, the carbon dioxide and sulfur oxide capture and carbon resource conversion system for coal-fired power generation according to the first and second embodiments of the present disclosure will be described in more detail with reference to the following drawings.

Meanwhile, in the following drawings, each boiler 210 and 310, each flue gas denitrification equipment 220 and 320, each dust collection equipment 230 and 330, and flue gas desulfurization equipment 340 are the same as the conventional ones, so that a detailed description thereof will be omitted.

### Embodiment 1

In the carbon dioxide and sulfur oxide capture and carbon resource conversion system for coal-fired power generation according to the first embodiment, carbon dioxide in an exhaust gas discharged from a coal-fired power generation plant is only captured.

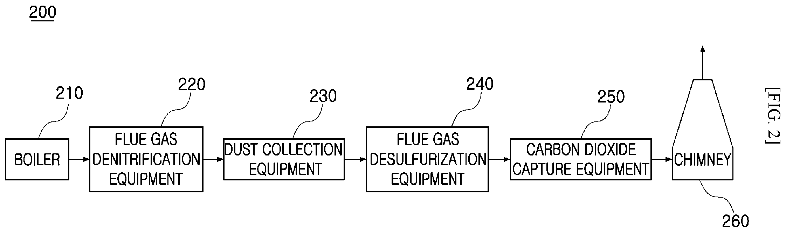

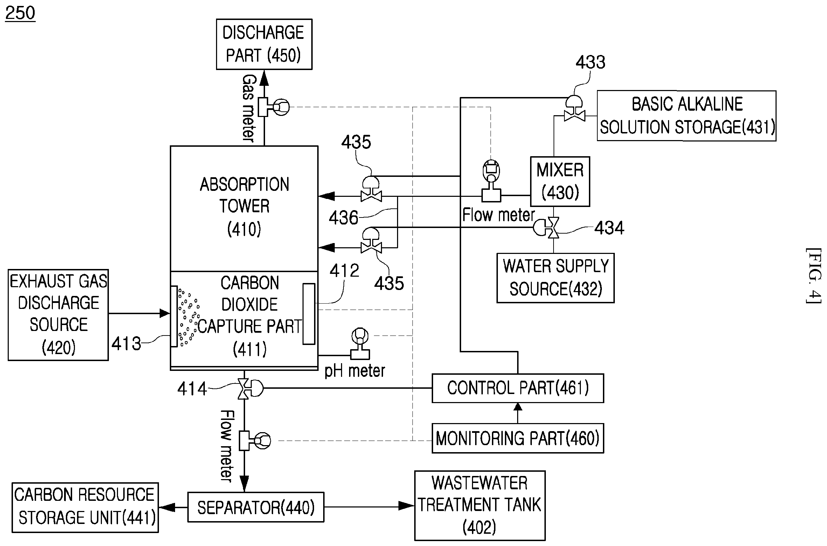

FIG. 2 is a view illustrating a configuration of the carbon dioxide and sulfur oxide capture and carbon resource conversion system for coal-fired power generation according to the first embodiment of the present disclosure, and FIG. 4 is a view illustrating carbon dioxide capture equipment 250 according to the first embodiment of the present disclosure.

Referring to FIG. 2 and FIG. 4, the carbon dioxide and sulfur oxide capture and carbon resource conversion system for coal-fired power generation according to the first embodiment of the present disclosure includes the boiler 210, the flue gas denitrification equipment 220, the dust collection equipment 230, the flue gas desulfurization equipment 240, and the carbon dioxide capture equipment 250.

Here, the carbon dioxide capture equipment 250 is an equipment configured to capture carbon dioxide in an exhaust gas by using a basic alkaline solution, the exhaust gas being discharged from a coal-fired power generation plant and being introduced from the flue gas desulfurization equipment 240 by passing through the boiler 210, the flue gas denitrification equipment 220, the dust collection equipment 230, and the flue gas desulfurization equipment 240. Furthermore, the carbon dioxide capture equipment 250 includes an absorption tower 410, a carbon dioxide capture part 411, an exhaust gas discharge source 420, a mixer 430, a separator 440, a carbon resource storage unit 441, and a discharge part 450.

The absorption tower 410 may refer to a facility, a building, an equipment, and so on capturing carbon dioxide in an exhaust gas from which sulfur oxide is removed by the flue gas desulfurization equipment 240. In addition, the carbon dioxide capture part 411 positioned on a lower end of the absorption tower 410 is a portion of the absorption tower 410, and may refer to a portion that captures carbon dioxide by bubbling the exhaust gas.

The absorption tower 410 includes the carbon dioxide capture part 411 which is positioned at the lower end of the absorption tower 410 and which is configured to capture carbon dioxide in the exhaust gas from which sulfur oxide is removed by the flue gas desulfurization equipment 240, and is configured to capture only carbon dioxide in the exhaust gas by reacting the basic alkaline mixture solution with the exhaust gas (micro bubbles of the exhaust gas). After carbon dioxide in the exhaust gas is captured, the exhaust gas from which carbon dioxide is removed may remain in a gaseous state in the absorption tower 410.

A nozzle is mounted on an upper portion of the absorption tower 410, the basic alkaline mixture solution is sprayed inside the absorption tower 410 through the nozzle from the mixer 130, and the basic alkaline mixture solution is collected in the carbon dioxide capture part 411 positioned at the lower end of the absorption tower 410. At the same time as the basic alkaline mixture solution is sprayed, the exhaust gas supplied from the exhaust gas discharge source 420 passes through a bubbler 413 in the carbon dioxide capture part 411 at the lower portion of the absorption tower 410, the exhaust gas in which micro bubbles are formed is supplied, and the basic alkaline mixture solution and the micro bubbles of the exhaust gas react with each other within the carbon dioxide capture part 411, so that carbon dioxide is captured. When the exhaust gas reacts with the basic alkaline mixture solution, the micro bubbles are formed while the exhaust gas passes through the bubbler 413 having fine holes formed on an outlet of the exhaust gas discharge source 420.

As the exhaust gas supplied from the exhaust gas discharge source 120 passes through the bubbler 413, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 µm and which exist in an aqueous solution.

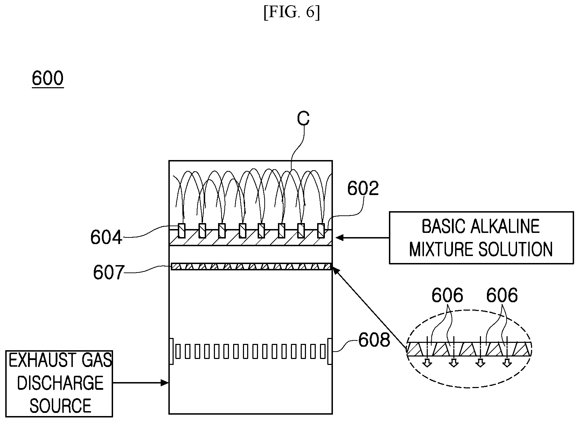

Meanwhile, as illustrated in FIG. 6, an internal configuration of the absorption tower may be provided to further improve the carbon dioxide capture performance of the carbon dioxide capture equipment. The internal configuration of the absorption tower will be described later in detail in FIG. 6.

In addition, the absorption tower 410 may include a level indicator 412 inside the absorption tower 410, so that a level of a solution in the absorption tower 410 is capable of being detected.

The nozzle may include a plurality of nozzles, and may be formed of at least one stage. The nozzle is connected to the mixer 430, and may supply the basic alkaline mixture solution from the mixer 430.

The absorption tower 410 may be configured in series, in parallel, or in a series and parallel complex arrangement.

For example, the absorption tower 410 may be arranged in series when the flow velocity of the exhaust gas is high. When carbon dioxide unreacted due to a high flow velocity is discharged from the absorption tower, the absorption tower may be mounted in series so as to capture the unreacted carbon dioxide.

In addition, for example, the absorption tower 410 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharge source 420 may utilize all gases that discharge carbon dioxide. For example, the exhaust gas discharge source may be a rear end of a power generation plant exhaust gas or a rear end of an engine exhaust gas. In the first embodiment of the present disclosure, the exhaust gas discharged from the coal-fired power generation plant may be an exhaust gas introduced from the flue gas desulfurization equipment 240 by passing through the boiler 210, the flue gas denitrification equipment 220, the dust collection equipment 230, the flue gas desulfurization equipment 240.

The mixer 430 mixes a basic alkaline solution supplied from a basic alkaline solution storage 431 with water supplied from a water supply source 432, and supplies the mixture to the nozzle of the absorption tower 410.

The basic alkaline mixture solution in which the basic alkaline solution and the water are mixed with each other may be supplied by using a separately connected bypass line 436 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 432 may include all water that may be easily acquired at a system installation site and may be, for example, seawater.

An average pH of the basic alkaline mixture solution may be at least pH 12. For example, the pH may be pH 12 to pH 13.5, pH 13, pH 12, pH 12.1, pH 12.2, or pH 12.3. The pH of the basic alkaline mixture solution may be measured by a pH meter in the absorption tower 410, and carbon dioxide cannot be captured anymore when the pH of the basic alkaline mixture solution in the absorption tower 410 is less than pH 10.5. Therefore, in order to adjust the pH of the basic alkaline mixture solution, the amount of the basic alkaline solution and the amount of water may be adjusted from zero to 100% by each valve 433 and 434 and the basic alkaline solution and the water may be supplied to the mixer 430.

When the level of the basic alkaline mixture solution in the absorption tower 410 is lower than 90% (measured by the level indicator), the input may be adjusted through a valve 435 at the mixer 430 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 410 and the amount of the solution discharged from the separator 440 are the same, the carbon dioxide capturing equipment is capable of being continuously maintained. Therefore, the valve (including a bypass valve if necessary) 435 is adjusted so that the same amount of the basic alkaline mixture solution as a value of a flow meter mounted in the line from the absorption tower 410 to the separator 440 is supplied to the absorption tower 410, thereby making the net flow to zero.

A reactant containing carbon dioxide captured by reacting the basic alkaline mixture solution and the exhaust gas that is introduced from the flue gas desulfurization equipment 240 with each other is collected in the carbon dioxide capture part 411 of the absorption tower 410, a carbon dioxide reactant and a waste solution from the reactant are moved to the separator 440 through a valve 414, and the carbon dioxide reactant and the waste solution are separated from the reactant.

The separator 440 may include a centrifuge configured to separate the waste solution and the carbon dioxide reactant containing sodium carbonate (Na₂CO₃) or sodium bicarbonate (NaHCO₃) from the reactant, and may include a vibration separation membrane formed corresponding to a size of an inner circumference of a discharge pipe for discharging only sodium bicarbonate in the carbon dioxide reactant separated from the centrifuge, the vibration separation membrane having a surface provided with fine holes such that carbon bicarbonate is capable of passing therethrough. Through this, a high purity sodium bicarbonate can be acquired and can be sold immediately, so that a profit may be realized.

The size of the fine holes formed in the vibration separation membrane may be 10 µm to 20 µm, and the vibration separation membrane may further include a vibration generation part so as to induce vibration in the vibration separation membrane. The vibration generation part may be disposed so as to prevent the fine holes from being blocked by sodium bicarbonate.

The separated carbon dioxide reactant may be moved to the carbon resource storage unit 441, and may be recycled so as to be utilized for other purposes. For example, the carbon dioxide reactant may include sodium carbonate (Na₂CO₃) or sodium bicarbonate (NaHCO₃).

As described in Formula 1 below, the carbon dioxide reactant may be formed by reacting the basic alkaline mixture solution with carbon dioxide.

<Formula 1> 2NaOH + CO₂ → Na₂CO₃ + H₂O

Na₂CO₃ + H₂O + CO₂ → 2NaHCO₃

In the reactant, the waste solution other than the carbon dioxide reactant is moved to a wastewater treatment tank 402 and then is discarded. For example, the waste solution may include illite minerals, water, and so on that are contained in the basic alkaline mixture solution that has finished a catalyst function.

The carbon resource storage unit 441 is a carbon dioxide reactant storage unit in which each environment on the ground, in the ground, and in the sea is considered, is capable of stably and efficiently storing a carbon resource that is a carbon dioxide capture reactant in a space larger than a conventional carbon dioxide storing apparatus and, at the same time, is capable of reducing the manufacturing cost, and may be implemented such that the stored carbon resource is capable of being utilized later when the stored carbon resource is required.

For example, the carbon resource storage unit considering the environment on the ground may include a storage tank which is configured to accommodate the carbon dioxide reactant and which has a double wall structure of an inner wall and an outer wall, an inlet unit configured to load the carbon dioxide reactant into the storage tank, a discharge unit connected to the storage tank and configured to unload the carbon dioxide reactant in the storage tank, and a control unit configured to maintain a constant vacuum state of the carbon dioxide reactant accommodated inside the storage tank or configured to control the inlet unit and the discharge unit during loading/unloading of the carbon dioxide reactant.

Meanwhile, the carbon resource storage unit considering the environment in the ground may use an underground reservoir instead of the storage tank of the carbon resource storage unit considering the environment on the ground. Furthermore, in order for storing the carbon dioxide capture reactant generated in the coal-fired power generation plant, the carbon dioxide capture reactant may be moved to an offshore structure such as an LNF FPSO, an LNG FSRU, an LNG transport ship, an LNG RV, and so on by using a transporting apparatus, and then may be stored.

The residual exhaust gas from which carbon dioxide is removed after carbon dioxide is captured in the carbon dioxide capture part 411 is discharged through the discharge part 450. For example, the residual exhaust gas discharged through the discharge part 450 may include the exhaust gas from which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The carbon dioxide capture equipment 250 may further include: a monitoring part 460 configured to monitor a level and a pH of the basic alkaline mixture solution in the absorption tower 410; and a control part 461 configured to adjust a supply amount of the basic alkaline mixture solution by the monitoring part 460.

Values of a gas meter, a pH meter, and a flow meter measured in all processes of carbon dioxide capture equipment 250 are managed in the monitoring part 460, and the control part 461 performs adjustment on the basis of the values represented by the monitoring part 460. The valves 414, 433, 434, and 435 may be adjusted in percentage with respect to values input from the control part 461.

In the carbon dioxide and sulfur oxide capture and carbon resource conversion system 200 for coal-fired power generation according to the first embodiment of the present disclosure, since only carbon dioxide in the exhaust gas discharged from the coal-fired power generation plant is captured, carbon dioxide is capable of being reduced while a problem of low process operation efficiency and reduction in economic feasibility of a conventional technology is solved, and the captured carbon dioxide may be recycled into other useful materials by converting the captured carbon dioxide into sodium carbonate or sodium bicarbonate.

### Embodiment 2

In the carbon dioxide and sulfur oxide capture and carbon resource conversion system according to the second embodiment, carbon dioxide is reduced by capturing carbon dioxide in an exhaust gas discharged from a coal-fired power generation plant, and the captured carbon dioxide reactant is used for capturing sulfur oxide in the exhaust gas, so that sulfur oxide is captured and reduced.

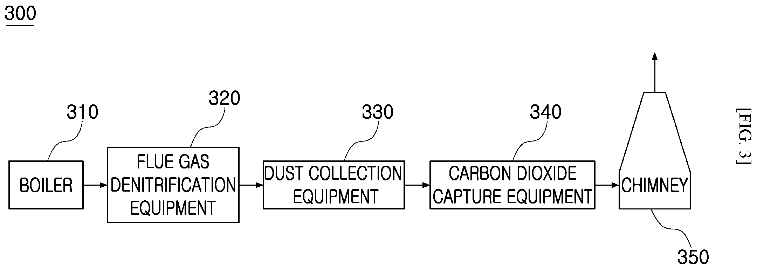

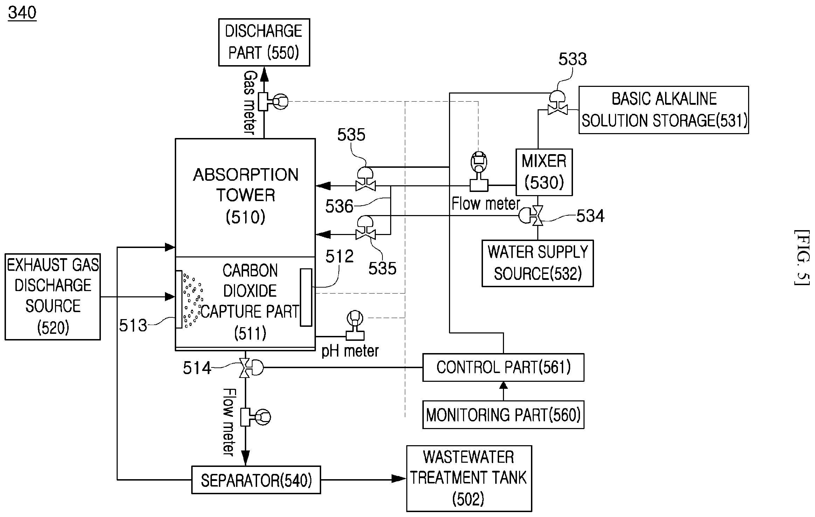

FIG. 3 is a view illustrating a configuration of the carbon dioxide and sulfur oxide capture and carbon resource conversion system for coal-fired power generation according to the second embodiment of the present disclosure, and FIG. 5 is a view illustrating the carbon dioxide capture equipment 340 according to the second embodiment of the present disclosure.

Referring to FIG. 3 and FIG. 5, the carbon dioxide and sulfur oxide capture and carbon resource conversion system for coal-fired power generation according to the second embodiment of the present disclosure includes the boiler 310, the flue gas denitrification equipment 320, the dust collection equipment 330, and the carbon dioxide capture equipment 340.

Here, the carbon dioxide capture equipment 340 is an equipment configured to capture carbon dioxide and sulfur oxide in an exhaust gas by using a basic alkaline solution, the exhaust gas being discharged from a coal-fired power generation plant and being introduced from the dust collection equipment 330 by passing through the boiler 310, the flue gas denitrification equipment 320, and the dust collection equipment 330. Furthermore, the carbon dioxide capture equipment 340 includes an absorption tower 510, a carbon dioxide capture part 511 including a bubbler 513, an exhaust gas discharge source 520, a mixer 530, a separator 540, and a discharge part 550.

The absorption tower 510 may refer to a facility, a building, an equipment, and so on capturing carbon dioxide and sulfur oxide in an exhaust gas from which nitrogen oxide and fine dusts are removed by the flue gas denitrification equipment 320 and the dust collection equipment 330.

In addition, the carbon dioxide capture part 511 positioned on a lower end of the absorption tower 510 is a portion of the absorption tower 510, and may refer to a portion that captures carbon dioxide by bubbling the exhaust gas.

A nozzle is mounted on an upper portion of the absorption tower 510, the basic alkaline mixture solution is sprayed inside the absorption tower 510 through the nozzle from the mixer 530, and the basic alkaline mixture solution is collected in the carbon dioxide capture part 511 positioned at the lower end of the absorption tower 510. At the same time as the basic alkaline mixture solution is sprayed, the exhaust gas which passes through the boiler 310, the flue gas denitrification equipment 320, and the dust collection equipment 330 and which is introduced from the dust collection equipment 330 passes through the bubbler 513 in the carbon dioxide capture part 511 at the lower portion of the absorption tower 511 so that micro bubbles are formed in the exhaust gas, and the exhaust gas micro bubbles and the basic alkaline mixture solution are reacted with each other in the carbon dioxide capture part 511, so that carbon dioxide is captured. When the exhaust gas reacts with the basic alkaline mixture solution, the micro bubbles are formed while the exhaust gas passes through the bubbler 513 having fine holes formed on an outlet of the exhaust gas discharge source 520.

In addition, the absorption tower 510 may include a level indicator 512 inside the absorption tower 510, so that a level of a solution in the absorption tower 410 is capable of being detected.

The nozzle may include a plurality of nozzles, and may be formed of at least one stage. The nozzle is connected to the mixer 530, and may supply the basic alkaline mixture solution from the mixer 530.

As the exhaust gas introduced from the dust collection equipment 330 by passing through the exhaust gas discharge source 520, i.e., the boiler 310, the flue gas denitrification equipment 320, and the dust collection equipment 330, passes through the bubbler 513, the micro bubbles may be formed in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 µm and which exist in an aqueous solution.

The absorption tower 510 may be configured in series, in parallel, or in a series and parallel complex arrangement. For example, the absorption tower 510 may be arranged in series when the flow velocity of the exhaust gas is high. When unreacted CO₂ is discharged from the absorption tower due to a high flow velocity, the absorption tower may be mounted in series so as to capture unreacted CO₂.

In addition, for example, the absorption tower 510 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharge source 520 may utilize carbon dioxide and sulfur oxide which are the exhaust gas introduced from the dust collection equipment 330 by passing through the boiler 310, the flue gas denitrification equipment 320, and the dust collection equipment 330. For example, the exhaust gas discharge source 520 may be a rear end of a power generation plant exhaust gas or a rear end of an engine exhaust gas.

The mixer 530 mixes a basic alkaline solution supplied from a basic alkaline solution storage 531 with water supplied from a water supply source 532, and supplies the mixture to the nozzle of the absorption tower 510.

The basic alkaline mixture solution in which the basic alkaline solution and the water are mixed with each other may be supplied by using a separately connected bypass line 536 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 532 may include all water that may be easily acquired at a system installation site and may be, for example, seawater.

An average pH of the basic alkaline mixture solution may be at least pH 12. For example, the pH may be pH 12 to pH 13.5, pH 13, pH 12, pH 12.1, pH 12.2, or pH 12.3. The pH of the basic alkaline mixture solution may be measured by a pH meter in the absorption tower 510, and carbon dioxide cannot be captured anymore when the pH of the basic alkaline mixture solution in the absorption tower 510 is less than pH 10.5. Therefore, in order to adjust the pH of the basic alkaline mixture solution, the amount of the basic alkaline solution and the amount of water may be adjusted from zero to 100% by each valve 532 and 533 and the basic alkaline solution and the water may be supplied to the mixer 530.

When the level of the basic alkaline mixture solution in the absorption tower 510 is lower than 90% (measured by the level indicator), the input may be adjusted through a valve 535 at the mixer 530 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 510 and the amount of the solution discharged from the separator 540 are the same, the carbon dioxide capturing equipment is capable of being continuously maintained. Therefore, the valve (including a bypass valve if necessary) 535 is adjusted so that the same amount of the basic alkaline mixture solution as a value of a flow meter mounted in the line from the absorption tower 510 to the separator 540 is supplied to the absorption tower 510, thereby making the net flow to zero.

The reactant containing carbon dioxide captured in the absorption tower 510 is moved to the separator 540, and the carbon dioxide reactant and the waste solution are separated from the reactant. The carbon dioxide reactant may be in a liquid state, and the waste solution may be in a gel state. For example, the separator 540 may separate the carbon dioxide reactant that is in the liquid state and the waste solution that is in the gel state by using a centrifugal separation method.

Here, in the reactant, the waste solution other than the carbon dioxide reactant is moved to a wastewater treatment tank 541 and then is discarded. For example, the waste solution may include the basic alkaline mixture solution (illite minerals, water, and so on) that has finished a catalyst function.

The carbon dioxide reactant may include sodium carbonate (Na₂CO₃) or sodium bicarbonate (NaHCO₃).

As described in Formula 2 below, the carbon dioxide reactant may be formed by reacting the basic alkaline mixture solution with carbon dioxide.

<Formula 2> 2NaOH + CO₂ → Na₂CO₃ + H₂O

Na₂CO₃ + H₂O + CO₂ → 2NaHCO₃

The carbon dioxide reactant separated from the separator 540 is supplied to the absorption tower 510 to collect sulfur oxide in the remaining exhaust gas after carbon dioxide is captured. At this time, the carbon dioxide reactant may be recycled as a desulfurization catalyst for removing sulfur oxide. Accordingly, carbon dioxide and sulfur oxide capture is capable of being realized by using one carbon dioxide capture equipment 340.

The carbon dioxide reactant and sulfur oxide in the remaining exhaust gas may be captured by being reacted as described in Formula 3 below.

<Formula 3> 2NaHCO₃ + SO₂ + 1/2 O₂ → Na₂SO₄ + 2CO₂ + H₂O

Na₂CO₃ + SO₂ + 1/2 O₂ → Na₂SO₄ + 2CO₂

After the capture of sulfur oxide is finished in the absorption tower 510, a solution containing the captured sulfur oxide existing in the absorption tower 510, the carbon dioxide reactant, and the remaining exhaust gas from which carbon dioxide and sulfur oxide are removed may be discharged to the outside through the discharge part 550. Specifically, the material discharged to the discharge part 550 may be the residual exhaust gas (N₂, O₂, and so on) from which carbon dioxide and sulfur oxide are removed and sodium sulfate (Na₂SO₄) that is generated when sulfur oxide is removed by a reaction between the carbon dioxide reactant and sulfur oxide, and sodium sulfate may be in a solid state in which the size of particles is very small and may float in the residual exhaust gas and may be discharged together with the residual exhaust gas.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

For example, the solution containing the captured sulfur oxide may be sodium sulfate (Na₂SO₄), and the carbon dioxide reactant may be sodium carbonate (Na₂CO₃) or sodium bicarbonate (NaHCO₃).

The carbon dioxide capture equipment 340 may further include: a monitoring part 560 configured to monitor a level and a pH of the basic alkaline mixture solution in the absorption tower 510; and a control part 561 configured to adjust a supply amount of the basic alkaline mixture solution by the monitoring part 560.

Values of a gas meter, a pH meter, and a flow meter measured in all processes of the carbon dioxide capture equipment 340 are managed in the monitoring part 560, and the control part 561 performs adjustment on the basis of the values represented by the monitoring part 560. The valves 514, 533, 534, and 535 may be adjusted in percentage with respect to values input from the control part 561.

In the carbon dioxide and sulfur oxide capture and carbon resource conversion system 300 for coal-fired power generation according to the second embodiment of the present disclosure, since carbon dioxide in the exhaust gas discharged from the coal-fired power generation plant is captured, carbon dioxide is capable of being reduced, and the captured carbon dioxide may be recycled into other useful materials by converting the captured carbon dioxide into sodium carbonate or sodium bicarbonate. In addition, since sodium carbonate or sodium bicarbonate manufactured from the captured carbon dioxide is utilized such that sodium carbonate or sodium bicarbonate is used as a desulfurization agent capturing sulfur oxide in the exhaust gas discharged from the coal-fired power generation plant, carbon dioxide and also sulfur oxide are capable of being captured simultaneously through one carbon dioxide capture equipment 340.

Therefore, without modifying the conventional flue gas desulfurization equipment or introducing an additional flue gas desulfurization equipment, carbon dioxide discharged from the coal-fired power generation plant may be efficiently reduced and also sulfur oxide is capable of being reduced with the low cost by the simple system configuration compared to that of a conventional technology.

FIG. 6 is a view schematically illustrating an internal configuration of the absorption tower for improving carbon dioxide capture performance of the carbon dioxide capture equipment according to an embodiment of the present disclosure.

Referring to FIG. 6, in the internal configuration of the absorption tower according to an embodiment of the present disclosure, the absorption tower 600 may further include a plurality of nozzles 604 provided at a pipe 602 configured to discharge the basic alkaline mixture solution upward in an umbrella shape C from the mixer in the absorption tower 600, a fine droplet member 607 configured such that the basic alkaline mixture solution discharged in the umbrella shape C forms fine droplets when the basic alkaline mixture solution falls downward and is in contact with pores 606, and a baffle 608 having a plurality of slits or holes such that the exhaust gas is introduced into the absorption tower with a uniform speed distribution.

Specifically, the basic alkaline mixture solution falls downward in the absorption tower 600 through the plurality of nozzles 604 configured to discharge the basic alkaline mixture solution in the umbrella shape C, is in contact with the pores of the fine droplet member 607 and droplets are formed, and the basic alkaline mixture solution is in contact with the exhaust gas formed as fine particles by passing through the baffles 608 having the plurality of slits or holes, so that carbon dioxide and sulfur oxide capture performance of the carbon dioxide capture equipment may be increased.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

According to the present disclosure, a carbon dioxide capture and carbon resource conservation function and a carbon dioxide and sulfur oxide capture function are capable of being easily applied as required, so that the carbon dioxide and sulfur oxide capture and carbon resource conversion system for coal-fired power generation configured to reduce carbon dioxide and sulfur oxide that are representative harmful substances affecting global warming among exhaust gases generated in the coal-fired power generation plant may be provided.

Specifically, in the carbon dioxide and sulfur oxide capture and carbon resource conversion system for coal-fired power generation according to the present disclosure, a problem of low process operation efficiency and reduction in economic feasibility of a conventional exhaust gas treatment system for coal-fired power generation is solved, sodium carbonate or sodium bicarbonate may be generated by using carbon dioxide captured through the carbon dioxide capture equipment, or sodium carbonate or sodium bicarbonate manufactured from the captured carbon dioxide may be used as a desulfurization agent capturing sulfur oxide in the exhaust gas discharged from the coal-fired power generation plant, so that carbon dioxide and sulfur oxide may be simultaneously captured.

The present disclosure has a sufficient possibility for marketing or sales of the carbon dioxide capture equipment for coal-fired power generation plants recognized as the main sources of greenhouse gas emissions, and is also feasible to the extent that the present disclosure is capable of being clearly realized in reality, so that the present disclosure has industrial applicability.

## Claims

1. A carbon dioxide and sulfur oxide capture and carbon resource conversion system for coal-fired power generation, the system being configured such that an exhaust gas discharged from combustion equipment burning oil or coal sequentially passes through flue gas denitrification equipment, dust collection equipment, and flue gas desulfurization equipment so that pollutants contained in the exhaust gas are removed and the exhaust gas is supplied to carbon dioxide capture equipment, the carbon dioxide capture equipment comprising:
a mixer configured to supply a basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect a reactant containing carbon dioxide captured in the absorption tower and to separate a carbon dioxide reactant and a waste solution from the reactant;
a carbon resource storage unit storing the separated carbon dioxide reactant for utilizing the carbon dioxide reactant; and
a discharge part configured to discharge a residual exhaust gas from which carbon dioxide captured in the absorption tower is removed.

2. The system of claim 1, wherein the mixer is configured to generate the basic alkaline mixture solution by mixing a basic alkaline solution supplied from a basic alkaline solution storage with water supplied from a water supply source.

3. The system of claim 2, wherein the basic alkaline solution and the water are mixed in a ratio of 1:1 to 1:5.

4. The system of claim 1, wherein an average pH of the basic alkaline mixture solution is pH 12 to pH 13.5.

5. The system of claim 1, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

6. The system of claim 1, wherein the basic alkaline mixture solution is input by being adjusted through a valve in the mixer when a level of the basic alkaline mixture solution in the absorption tower is lowered to less than 90%, and inputting of the basic alkaline mixture solution is stopped and, at the same time, the basic alkaline solution and water are mixed until a pH of the basic alkaline mixture solution becomes pH 12 to pH 13.5 when the level of the basic alkaline mixture solution becomes 100%.

7. The system of claim 1, wherein the bubbler is configured to form exhaust gas micro bubbles by using the exhaust gas.

8. The system of claim 1, wherein the absorption tower comprises:
a plurality of nozzles configured to spray the basic alkaline mixture solution in an umbrella shape upward from the mixer in the absorption tower;
a fine droplet member configured such that the basic alkaline mixture solution sprayed in the umbrella shape is brought into contact with pores and forms fine droplets when the basic alkaline mixture solution falls downward; and
a baffle having a plurality of slits or holes such that the exhaust gas is introduced with a uniform speed distribution.

9. The system of claim 1, wherein the carbon dioxide reactant comprises sodium carbonate (Na₂CO₃) or sodium bicarbonate (NaHCO₃).

10. The system of claim 1, wherein the separator comprises:
a centrifuge configured to separate the waste solution and the carbon dioxide reactant containing sodium carbonate (Na₂CO₃) or sodium bicarbonate (NaHCO₃) from the reactant; and
a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

11. The system of claim 1, wherein the carbon dioxide capture equipment further comprises:
a monitoring part configured to monitor a level and a pH of the basic alkaline mixture solution in the absorption tower; and
a control part configured to adjust a supply amount of the basic alkaline mixture solution by the monitoring part.

12. A carbon dioxide and sulfur oxide capture and carbon resource conversion system for coal-fired power generation, the system being configured such that an exhaust gas discharged from combustion equipment burning oil or coal sequentially passes through flue gas denitrification equipment, dust collection equipment, and flue gas desulfurization equipment so that pollutants contained in the exhaust gas are removed and the exhaust gas is supplied to carbon dioxide capture equipment, the carbon dioxide capture equipment comprising:
a mixer configured to supply a basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect a reactant containing carbon dioxide captured in the absorption tower and to separate a carbon dioxide reactant and a waste solution from the reactant; and
a discharge part configured to transmit the carbon dioxide reactant to the absorption tower from the separator, to capture sulfur oxide in the exhaust gas, and to discharge the captured sulfur oxide, the carbon dioxide reactant, and a residual exhaust gas.

13. The system of claim 12, wherein the mixer is configured to generate the basic alkaline mixture solution by mixing a basic alkaline solution supplied from a basic alkaline solution storage with water supplied from a water supply source.

14. The system of claim 13, wherein the basic alkaline solution and the water are mixed in a ratio of 1:1 to 1:5.

15. The system of claim 12, wherein an average pH of the basic alkaline mixture solution is pH 12 to pH 13.5.

16. The system of claim 12, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

17. The system of claim 12, wherein the basic alkaline mixture solution is input by being adjusted through a valve in the mixer when a level of the basic alkaline mixture solution in the absorption tower is lowered to less than 90%, and inputting of the basic alkaline mixture solution is stopped and, at the same time, the basic alkaline solution and water are mixed until a pH of the basic alkaline mixture solution becomes pH 12 to pH 13.5 when the level of the basic alkaline mixture solution becomes 100%.

18. The system of claim 12, wherein the bubbler is configured to form exhaust gas micro bubbles by using the exhaust gas.

19. The system of claim 12, wherein the absorption tower comprises:
a plurality of nozzles configured to spray the basic alkaline mixture solution in an umbrella shape upward from the mixer in the absorption tower;
a fine droplet member configured such that the basic alkaline mixture solution sprayed in the umbrella shape is brought into contact with pores and forms fine droplets when the basic alkaline mixture solution falls downward; and
a baffle having a plurality of slits or holes such that the exhaust gas is introduced with a uniform speed distribution.

20. The system of claim 12, wherein the carbon dioxide reactant comprises sodium carbonate (Na₂CO₃) or sodium bicarbonate (NaHCO₃).

21. The system of claim 12, wherein the separator comprises:
a centrifuge configured to separate the waste solution and the carbon dioxide reactant containing sodium carbonate (Na₂CO₃) or sodium bicarbonate (NaHCO₃) from the reactant; and
a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

22. The system of claim 12, wherein the carbon dioxide capture equipment further comprises:
a monitoring part configured to monitor a level and a pH of the basic alkaline mixture solution in the absorption tower; and
a control part configured to adjust a supply amount of the basic alkaline mixture solution by the monitoring part.
